# EUROPEAN PATENT APPLICATION

(11) **EP 2 079 082 A1**
(43) Date of publication of application: **15.07.2009**
(21) Application number: 07831163.6
(22) Date of filing: 02.11.2007
(51) Int. Cl.: G11B 7/258, G11B 7/24, G11B 7/26

(54) **OPTICAL INFORMATION RECORDING MEDIUM, METHOD FOR MANUFACTURING OPTICAL INFORMATION RECORDING MEDIUM, AND BCA (BURST CUTTING AREA) MARKING METHOD**

(30) Priority: 02.11.2006 JP 2006299503
(71) Applicant: Kabushiki Kaisha Kobe Seiko Sho, Chuo-ku Kobe-shi Hyogo 651-8585 (JP)
(72) Inventor: SAKAMOTO, Tetsuhiro, Tokyo 108-0075 (JP); NAKANO, Jun, Tokyo 108-0075 (JP); TAUCHI, Yuki, Tokyo 108-0075 (JP); NAKAI, Junichi, Tokyo, 108-0075 (JP)
(74) Representative: Müller-Boré & Partner Patentanwälte
(86) International application number: PCT/JP2007/071429
(87) International publication number: WO 2008/053999

(57) **Abstract**

The invention provides an optical information recording medium which is compatible with Blu-ray for recording a BCA signal by laser marking, in which the optical information recording medium has superior reading properties and is improved in recording properties and reliability in a BCA portion. A reflective film 7 includes Ag as a main component, and Nd, Gd, and Bi, in which Nd, Gd and Bi are effective for long-tem storage stability and inhibition of corrosion, and an addition of a small amount of Gd is effective for enhancing absorption of laser marking light. Accordingly, the invention can provide a highly-reliable optical information recording medium that exhibits a superior reading property of an information recording portion and a BCA portion, and that simultaneously exhibits a superior recording property of the BCA portion by selection of the composition at recording a BCA signal by laser marking.

## Description

### Technical Field

The present invention relates to an optical information recording medium and, particularly, to an optical information recording medium comprising a BCA (Burst Cutting Area) made by laser marking, a method for manufacturing the optical information recording medium, and a BCA (Burst Cutting Area) marking method.

### Background Art

An optical information recording medium, such as a read-only type or ROM (Read Only Memory) type CD (Compact Disc), DVD (Digital Versatile Disc), BD (Blu-ray disc), HD-DVD (High Definition DVD), includes an original information recording portion where sounds, images, and other data information are to be recorded, such as a content area and its lead-in area. However, there is also an optical information recording medium that includes, at its center area, a BCA (Burst Cutting Area) where, for instance, a serial number is recorded for each piece of medium in order to protect copyright, or prevent unauthorized copy, and to trace circulation of commodities, or the like; or for which formation of the BCA portion is expected.
In the BCA portion, a BCA signal is formed by making bar-code stripes, by marking involving irradiation with a laser light, on a reflective film of the optical information recording medium made simultaneously with formation of a reflective film in the foregoing original information recording portion of the optical information recording medium.

Recording a BCA signal on the reflective film through irradiation with a laser light entails heat development in the reflective film in which the laser light absorbed; thereupon inducing fusing, fluidization, and coagulation of the reflective film, and the signal is recorded as a BCA mark including an area where the reflective film is absent and some areas (residues) where the reflective film is coagulated. Fusion of a reflective film within a short period of time and at low power becomes an index for determining whether or not the recording property of the reflective film is superior from the viewpoint of productivity improvements, power savings and the like.
The reading property includes reading of information from the original information recording portion of the optical information recording medium, such as the content area and its lead-in area as stated above, high reflectivity that enables generation of a high reading output by means of reading information from the BCA portion, and small jitter in a reading signal, and the like.

An Ag alloy is used as a reflective film having a high reflectivity in a recordable-type optical disc. However, the reflective film has low heat resistance and involves occurrence of unwanted coagulation at high temperatures, which in turn raises a problem of a reduction in reflectivity.
In the meantime, it has been proposed to cause Ag to contain a rare-earth element by making an attempt to solve the problem, thereby inhibiting growth or coagulation of Ag grains (see Patent Document 1).
Another proposal is to cause Ag to contain Bi or Sb, to thus enhance reflectivity and durability (see Patent Document 2).

However, none of the reflective films is based on the premise that a film is fused or removed by irradiation with a laser light Hence, laser marking of the BCA portion involves consumption of much time or high power, thus, sufficient satisfaction cannot be attained from the viewpoint of productivity and power savings.
Patent Document 1: Japanese Patent No. 3365762
Patent Document 2: Japanese Patent No. 3655907

### Disclosure of the Invention

### Problem that the Invention is to solve

The invention provides a highly-reliable optical information recording medium that exhibits a superior reading property of a BCA portion and an original information recording portion which is a read-only information recording portion in a ROM (Read On Memory) type, such as the previously-described content area or its lead-in area, in a Blu-ray compatible BD (Blu-ray disc) or the like including a BCA (Burst Cutting Area) portion made by laser marking, and that simultaneously exhibits a superior recording property of the BCA portion, as well as providing a method for BCA (Burst Cutting Area) marking them and a method for manufacturing an optical information recording medium.

### Means for Solving the Problem

An optical information recording medium of the invention is characterized by comprising a read-only information recording portion and a BCA (Burst Cutting Area) portion made by laser marking, wherein a reflective film of an information recording face of the read-only information recording portion is made of a same material as that of a reflective film of the BCA portion; a composition of the reflective film includes Ag as a main component, and Nd, Gd, and Bi; a component of the Nd is in an amount of 0.1 atomic % or more and 1.0 atomic % or less; a component of the Gd is in an amount of 0.1 atomic % or more and 1.0 atomic % or less; and a component of the Bi is in an amount of 0.005 atomic % or more and 0.4 atomic % or less..

An optical information recording medium of the invention is also characterized by comprising an information recording portion comprising an information recording face capable of recording at least one times and a BCA (Burst Cutting Area) portion made by laser marking, wherein the information recording face includes at least a recording film for recording information and a reflective film located at a position distant from the recording film when viewed from a light entrance side; the reflective film of the information recording face is made of a same material as that of the reflective film of the BCA portion; a composition of the reflective film includes Ag as a main component, and Nd, Gd, and Bi; a component of the Nd is in an amount of 0.1 atomic % or more and 1.0 atomic % or less; a component of the Gd is in an amount of 0.1 atomic % or more and 1.0 atomic % or less; and a component of the Bi is in an amount of 0.005 atomic % or more and 0.4 atomic %.

Moreover, a method of BCA (Burst Cutting Area) laser marking an optical information recording medium of the invention is **characterized in that** the optical information recording medium comprises a read-only information recording portion and a BCA (Burst Cutting Area) portion made by laser marking, wherein a reflective film of at least one information recording face of the read-only information recording portion is made of a same material as that of a reflective film of the BCA portion; a composition of the reflective film includes Ag as a main component, and Nd, Gd, and Bi; a component of the Nd is in an amount of from 0.1 atomic % or more and 1.0 atomic % or less; a component of the Gd is in an amount of from 0.1 atomic % or more and 1.0 atomic % or less; and a component of the Bi is in an amount of from 0.005 atomic % or more and 0.4 atomic % or less, wherein a laser light for marking is irradiated to the BCA portion from a face opposite to a face of the read-only information recording portion and BCA portion of the optical information recording medium on which a blue-violet laser reading light enters.

A method for manufacturing an optical information recording medium of the invention is **characterized in that** the optical information recording medium comprises a read-only information recording portion and a BCA (Burst Cutting Area) portion made by laser marking, wherein a reflective film of at least one information recording face of the read-only information recording portion is made of a same material as that of a reflective film of the BCA portion; a composition of the reflective film includes Ag as a main component, and Nd, Gd, and Bi; a component of the Nd is in an amount of from 0.1 atomic % or more and 1.0 atomic % or less; a component of the Gd is in an amount of from 0.1 atomic % or more and 1.0 atomic % or less; and a component of the Bi is in an amount of from 0.005 atomic % or more and 0.4 atomic % or less, wherein a laser light is irradiated to a face opposite to a face of the read-only information recording portion and BCA portion of the optical information recording medium on which a blue-violet laser reading light enters, to conduct laser marking to the BCA portion. Advantages of the Invention

In the optical information recording medium of the invention, a reflective film making up a read-only information recording portion and a BCA portion includes Ag as a main component, and Nd, G, and Bi; a component of the Nd is in an amount of from 0.1 atomic % or more and 1.0 atomic % or less; a component of the Gd is in an amount of from 0.1 atomic % or more and 1.0 atomic % or less; and a component of the Bi is in an amount of from 0.005 atomic % or more and 0.4 atomic % or less. As a result, despite Ag is contained as the main component, an attempt is made to enhance a property of recording a B CA signal on the reflective film by laser marking, a reading property of the BCA portion, and a reading property of the original information recording portion of the optical information recording medium, for instance, a read-only information recording medium.

Specifically, an attempt is made to reduce recording power of laser marking on a reflective film in connection with the recording property of the BCA signal. Further, an attempt is made to increase recording speed by reducing the recording power as well as to reduce the cost for manufacturing the optical information recording medium. Further, it is made possible to record and read in accordance with a specified format or the BCA portion.

In relation to the reading property, the maximum value of reflectivity (hereinafter R_{8H}) of an 8T signal in the 17PP modulated signal in, for instance, a BD (Blu-ray disc), is defined as reflectivity. There are obtained results showing that reflectivity sufficiently exceeding the lower limit 35% of the standard can be obtained and that jitter can be reduced to a value which is sufficiently lower than the upper limit 6.5% of the standards in connection with the 17PP modulated signal.
Further, enhancement of weather resistance and reliability of the reflective film was confirmed.

Specifically, attempts have already been made to enhance the sensitivity of marking by laser heating by addition of another element so that the reflective film can be subjected to laser marking. However, the related-art configuration encounters a problem of a decrease in reflectivity and long-term storage stability in return for enhancement of sensitivity.

In the above configuration, Nd, Gd, and Bi are mainly effective for long-term storage stability and inhibition of corrosion, and an addition of a small amount of Gd is also effective for effectively absorbing laser marking light
The lower limit of the additive amount of these is requisite conditions for implementing the above superior laser marking properties and performing laser marking within a short period of time and at low power.
Moreover, the upper limit of the additive amount is important for realizing the above superior reading properties and the long-term storage stability.

According to the BCA laser marking method of the invention, the original information recording portion, such as a content area or a lead-in area, is subjected to recording from its side opposite to a side where a blue-violet laser reading light enters, whereby laser marking, namely, the recoding sensitivity of the BCA signal, can be made constant regardless of whether the information recording face is a single layer or a multilayer, so that power for recording the BCA signal can be made constant.

According to the method for manufacturing an optical information recording medium of the invention, it is possible to manufacture an optical information recording medium that is enhanced in connection with a property of recording a BCA signal on a reflective film by means of laser marking, a reading property of the BCA portion, and a reading property of the original information recording portion of the optical information recording medium, for instance, a read-only information recording portion, and that has a BCA signal recorded at constant recording power regardless of whether the information recording face is a single layer or a multilayer.

### Brief Description of the Drawings

[Fig. 1] A plan view of an example of an optical information recording medium of the invention.
[Fig. 2] A schematic cross-sectional view of a portion of an example of an optical information recording medium of the invention taken along its circumferential direction.
[Fig. 3] A schematic cross-sectional view of a main section of an example of an optical information recording medium of the invention showing an enlarged BCA portion.
[Fig. 4] A view showing processes for manufacturing an example of an optical information recording medium of the invention.
[Fig. 5] A schematic pattern of an example of a BCA code.
[Fig. 6] Figure A is a chart showing a current waveform detected from a reflection light of reading light from a BCA code by a detector, and Figure B is a chart of a waveform of an output from a LPF when a detected current is input to a low-pass filter LPF.
[Fig. 7] A schematic cross-sectional view of a portion of an example of a multilayer optical information recording medium of the invention.
[Fig. 8] A table showing measurement results of properties when a composition of a reflective film of an optical information recording medium is changed.
[Fig. 9] A view showing measurement results of reflectivity R_{8H} of an optical information recording medium whose reflective film is changed in terms of a composition and a thickness.
[Fig. 10] A view showing measurement results of jitter of an optical information recording medium whose reflective film is changed in terms of a composition and a thickness.
[Fig. 11] A view showing measurement results of reflectivity R_{8H} of an optical information recording medium whose reflective film is changed in terms of a composition through an acceleration test (Aging),.
[Fig. 12] A view showing measurement results of jitter of an optical information recording mediums whose reflective film is changed in terms of a composition through an acceleration test (Aging).
[Fig. 13] A photographic chart showing microscopic observation of an area on an optical information recording medium of the invention marked with a BCA code by laser.

### Descriptions of the Reference Numerals

1 ... OPTICAL INFORMATION RECORDING MEDIUM
2 ... BCA (BURST CUTTING AREA) PORTION
3 ... READ-ONLY INFORMATION RECORDING PORTION
4 ... SUBSTATE
5 ... INFORMATION RECORDING FACE
6 ... CONCAVOCONVEX FACE
7 ... REFLECTIVE FILM
8 ... LIGHT TRANSPARENT LAYER
9 ... STRIPE
51 ... FIRST INFORMATION RECORDING FACE
52 ... SECOND INFORMATION RECORDING FACE

### Best Mode for Implementing the Invention

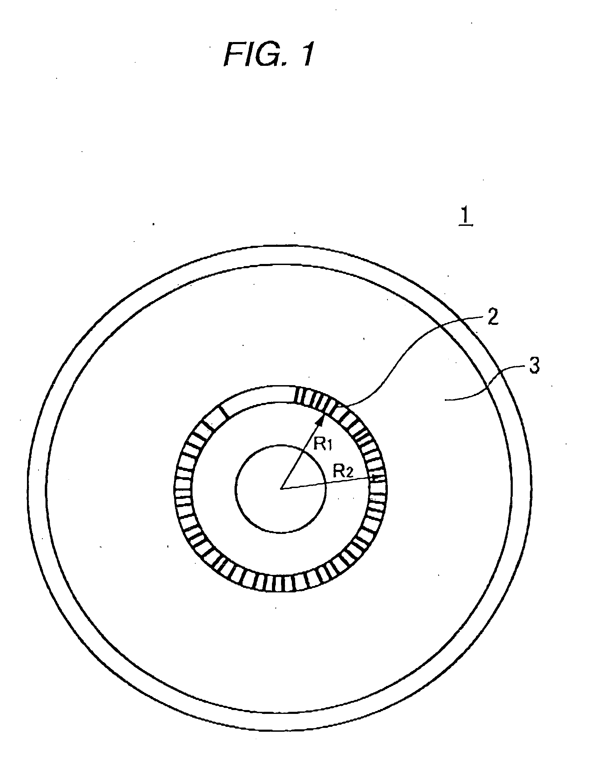

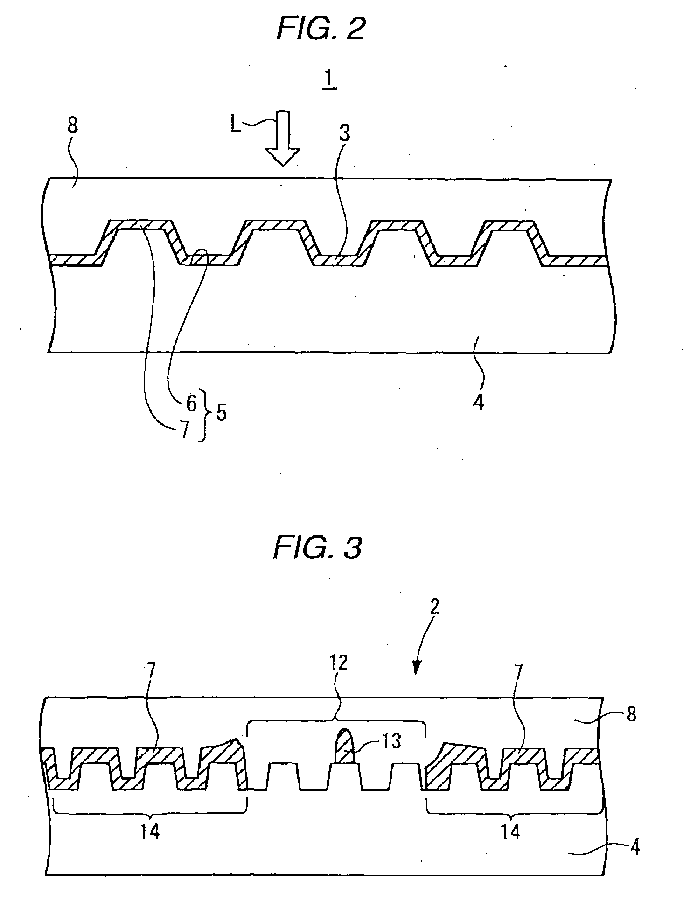

An embodiment pertaining to an optioal information recording medium, a method for manufacturing an optical information recording medium, and a method for BCA (Burst Cutting Area) laser marking, all of which belong to the invention, is exemplified, however, the invention is not limited to the embodiment
Fig. 1 is a plan view of an example of an optical information recording medium 1 of the invention, and Fig. 2 is a schematic cross-sectional view of a portion of the optical information recording medium in its circumferential direction.
The optical information recording medium 1 is a recording medium compatible with blue-violet reading light whose wavelength is in the vicinity of 405 nm; for instance, an optical information recording medium embodied by a BD (Blu-ray disc) of read-only (ROM type). A BCA (Burst Cutting Area) portion 2 is formed around the center of the recording medium; namely, a center hole. A read-only information recording portion 3 that is an original information recording portion of a recording medium, such as a content area or a lead-in area, is formed around the BCA portion.

As shown in Fig. 2, this optical information recording medium 1 comprises an information recording face 5 that makes up the previously-described read-only information recording portion 3 and that is made on one main plane of a disc-shaped substrate 4 which is made of, for instance polycarbonate, having a thickness of 1.1 mm and a diameter of 12 cm. A concavoconvex face 6 is formed by a pit line based on various types of recorded information, and a reflective film 7 is formed over the concavoconvex face.

A light transparent layer 8 is formed on a surface of the optical information recording medium 1 opposite to the substrate 4, by pasting a light transparent sheet or applying a light transparent resin. The reading light L is irradiated by a blue-violet laser light having a wavelength of 405 nm or the like, from the side of the light transparent layer 8, whereupon information recorded on the information recording face 5 is read out, or equivalently, read.

The BCA portion 2 is formed in an annular zone, which has an inner radius R1 of 21.3 mm (with an allowance of +0.00 to -0.3 mm) and an outer radius R2 of 22.0 mm (with an allowance of +0.2 to -0.0 mm) on the disc having a diameter of 12 cm. Fig. 3 shows a portion of the BCA portion 2 enlarged in its circumferential direction as a schematic cross-sectional view. In the BCA portion 2, a laser-marked area 12 does not include any reflective film 7 and includes a residue 13 resultant from coagulation of a portion of the reflective film. Reference numeral 14 designates an area which is not subjected to laser marking, where the reflective film 7 remains.

A method for manufacturing an optical information recording medium (in the case of read-only type) including the foregoing structure according to the invention will now be described.

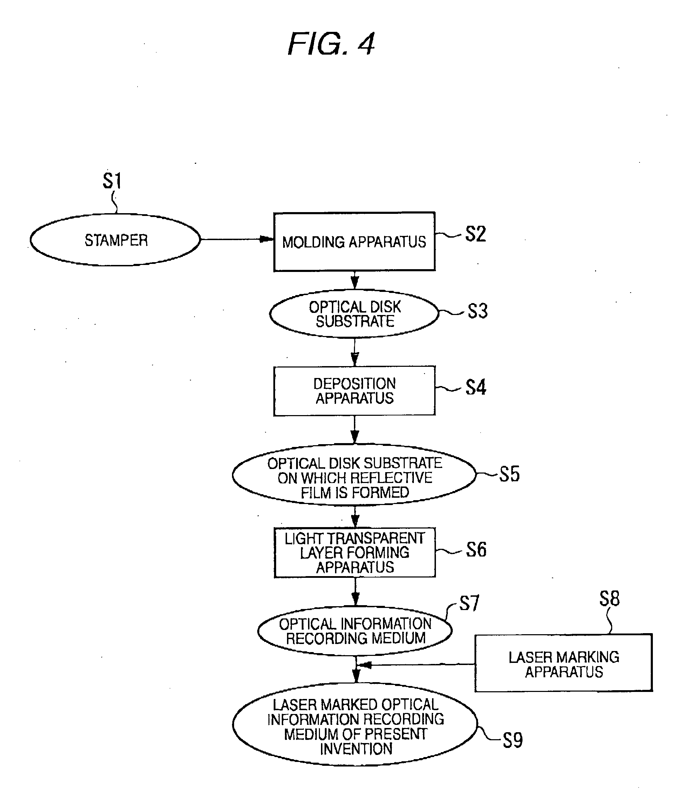

Fig. 4 is a flowchart showing processes for manufacturing the optical information recording medium of the invention. First, in the case of a read-only type, a mold called a stamper in which a pit pattern is formed is manufactured in step S1 through, for instance, a mastering process. In step S2, molding is performed by means of a molding apparatus and through use of the stamper, to form as a disc substrate is molded (step S3). The disc substrate has a thickness of 1.1 mm and a diameter of 12 cm, and a shape into which a pit pattern of the stamper is inverted is transferred to one main plane, to form an information recording face. A compression molding method, an injection molding method, a photocurable method and the like, have hitherto been known as a method for molding the disk substrate. Injection molding is generally used.
In step S4, a deposition apparatus forms the reflective film 7 on the information recording surface by use of the thus-obtained disk substrate (step S5). A sputtering method, a deposition method, a CVD method and the like, have hitherto been known as the method for forming the reflective film 7, and the sputtering method is generally used.
In step S6, the light transparent layer 8 is formed on the information recording face 5 on which the reflective film 7 is formed by use of a light transparent layer forming apparatus. As mentioned previously, a method for forming a light transparent layer by pasting a light transparent sheet with an adhesive or applying a light transparent resin or the like, has hitherto been known as a method for making the light transparent layer 8.
The optical information recording medium 1 is produced through the foregoing processes (step 7). In step S8, it is further subjected to laser marking. Laser marking is carried out by the following method.
The optical information recording medium 1 is subjected to marking under the predetermined method and through use of a laser marking apparatus; that is, a writer equipped with a high-power laser for laser marking, whereby the optical information recording medium comprising an information recording portion and a laser marking portion of the present invention is obtained (step S9).

The reflective film 7 of the optical information recording medium 1 of the invention contains Ag as the main component, and Nd, Gd, and Bi.
A component of the Nd is in an amount of 0.1 atomic % or more and 1.0 atomic % or less; a component of the Gd is in an amount of 0.1 atomic % or more and 1.0 atomic % or less; and a component of the Bi is in an amount of 0.005 atomic % or more and 0.4 atomic % or less.

The annular zone of the reflective film 7 is irradiated with a high-power laser light for recording having, for instance, a wavelength of 810 nm, whereupon a BCA signal is marked, to thus form the BCA portion 2.

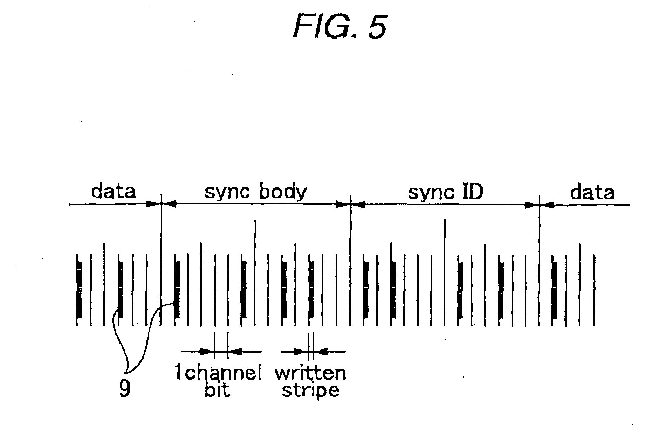

Fig. 5 is a schematic pattern of a BCA code for the BCA portion 2.
The concavoconvex face 6 of the information recording face 5, namely, 2T to 8T pits (not shown) formed simultaneously with formation of information pits, is formed in an arrangement on the BCA portion 2, and the foregoing reflective film 7 is entirely formed thereon.

Under the BCA marking method of the invention, marking of a BCA signal or recording of a BCA signal on the reflective film 7 of the BCA zone where the pits are made is performed by means of formatting the optical information recording medium 1 through blue-violet laser reading or making barcode-shaped stripes 9 in a format defined by BD standards in this embodiment.
The stripes 9 are formed from absent areas by a laser light, wherein the absent areas are formed by irradiating with a recording laser light having a wavelength of 810 nm from the side of the substrate 1, to thus fuse the reflective film and remove the reflective film 2 in the form of stripes by resultant fluidization and coagulation of a material of the reflective film.
A spot irradiated with a laser light has a shape , for instance, having a length of 40 µm and a width of 1 µm, and is formed at power density of 110 mW/µm². In contrast, the stripe 9 has, for instance, a length of 700 µm to 1200 µm and a width of; for instance, 12 µm. Accordingly, recording performed by means of a recording laser light involves iterative irradiation while the irradiated position is vertically and horizontally moved.

As in the case of reading from the information recording face 5, reading from the BCA signal portion 2 is performed as a result of the optical information recording medium being irradiated, from the same side, that is, from the side of the light transparent layer 8, with reading light L originating from a blue-violet laser light having a wavelength in the vicinity of 405 nm.

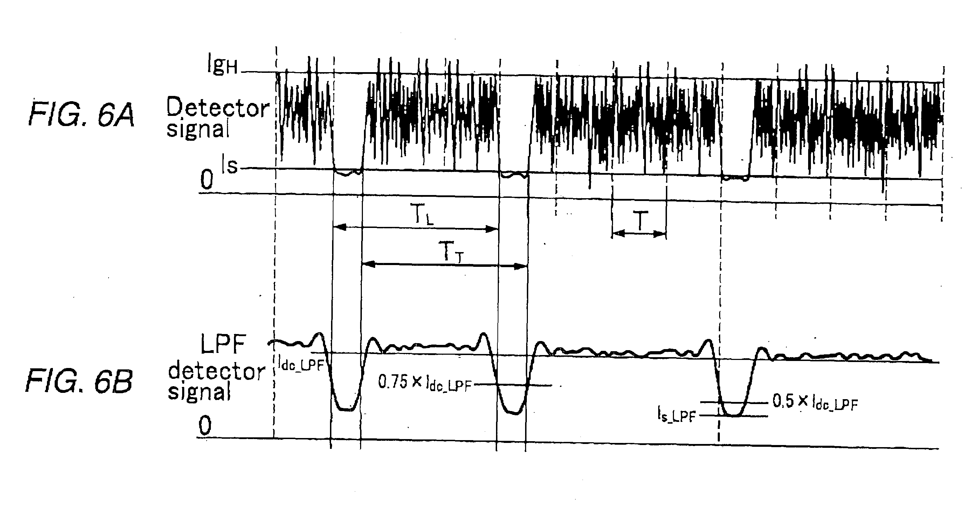

Fig. 6A shows a waveform chart of a detection output current from a detector in connection with a reflected reading light read out from the BCA code by irradiation with a reading light When the BCA signal is read, a reading laser light is subjected to focusing control but not to tracking control. In an area of the stripe 9 where the reflective film 7 is removed, reflection does not substantially arise, hence, the BCA signal exhibits a very small detection output current Is. In the meantime, a 17 pp modulated signal appears in an area where no stripes are present, and the highest detection output current is I_{8H} obtained from an 8T signal.
A high-frequency component of the detection output current is cut by a low-pass filter (not shown) having a cutoff frequency of 500 kHz. Fig. 6B is a chart of a waveform output from the low-pass filter LPF, and a BCA signal by pulses is obtained in accordance with an interval and a width corresponding to the stripe 9.

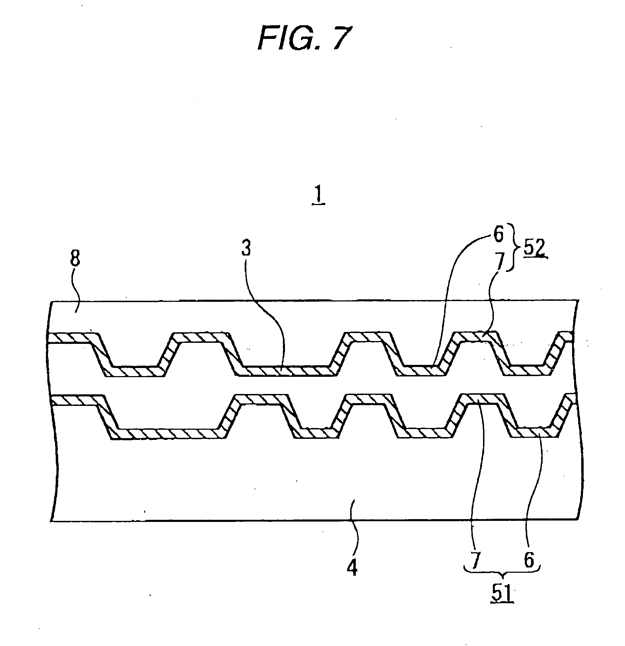

The optical information recording medium 1 of the invention shown in Fig. 2 corresponds to a case where the information recording face 5 of the read-only information recording portion 3 is embodied as a single-layer structure. However, Fig. 7 is a schematic cross-sectional view of the main portion of the optical information recording medium 1 of another embodiment of the optical information recording medium 1 of the invention. This embodiment illustrates an optical information recording medium with a multilayer structure in which a read-only information recording portion has two layers.
In Fig. 7, elements corresponding to those shown in Fig. 2 are assigned the same reference numerals, and their overlapping explanations are omitted. This embodiment is a case where the concavoconvex face 6 formed by lines of pits corresponding to a variety of pieces of data information like contents information, such as sounds or images, is formed on one main surface of the substrate 4, as mentioned above, and where a first information recording face 51 and a second information recording face 52, on each of which the reflective film 7 is formed, are laminated into a two-layer structure.

The first information recording face 51 and the second information recording face 52 can be produced by a known method. Concurrently with molding of the substrate 2, the concavoconvex face 6 forming the first information recording face 51 is molded on one main face of the substrate, and the reflective film 7 is formed on the surface thereof by, for instance, sputtering, through use of a material having the above-described composition. The concavoconvex face 6 by recording information on the second information recording face 52 is formed on the first information recording face 51 by; for example, a so-called 2P (Photopolymerization) method involving coating of an ultraviolet curable resin, press molding, and solidifying through UV irradiation, and the reflective film 7 is formed thereon by sputtering or the like.

Even in this case, in both cases where it is read from the information recording face by a blue-violet laser light having a wavelength in the vicinity of 405 nm and where it is read from the BCA signal portion 2, the reading light L is irradiated from the side of the light transparent layer 8.
In this case, reading from each of the first information recording face 51 and the second information recording face 52 is performed by selectively focusing a reading light on the first information recording face 51 or the second information recording face 52 during reading.
Therefore, the reflective film 7 of the information recording face located at a position (a so-called deep position) most distant from a face on which a blue-violet laser reading light enters, that is, the reflective film 7 of the information recording face 51 in the embodiment shown in Fig. 7, should preferably be embodied as a totally-reflective film that totally reflects an arriving laser light and that is to be a reflection face having a high reflection. The information recording face located at a forwardly-closer position (a so-called shallow position), namely the reflective film 7 of the second information recording face 52 in the embodiment, is embodied as a semi-transparent reflective film with respect to the reading light L.
The previously-mentioned composition can be selected for the semi-transparent reflective film, and the transmissivity can be selected by selecting, for example its thickness. The semi-transparent reflective film is made thinner than the totally-reflective film. Different compositions can also be selected respectively for the totally-reflective film and the semi-transparent reflective film. Even in such a case, the transmissivity can be selected by selection of its thickness in the same manner as mentioned above.

The embodiment shown in Fig. 7 is a case where an optical information recording medium is embodied as having a multilayer data information recording face with two layers of the information recording faces 51 and 52. The multilayer optical information recording medium is not limited to two layers but can also be embodied as having three layers or more. In any of these multilayer optical information recording mediums, the reflective film 7 of the information recording face located most rearwardly with respect to the incident light of the blue-violet laser reading , namely, most distant from the entrance face, is used as a reflective film in the BCA portion 2 where the BCA signal is to be recorded.
Even recording of the BCA signal, namely laser marking, is performed by irradiating with the recording laser light from the side of the substrate 4.

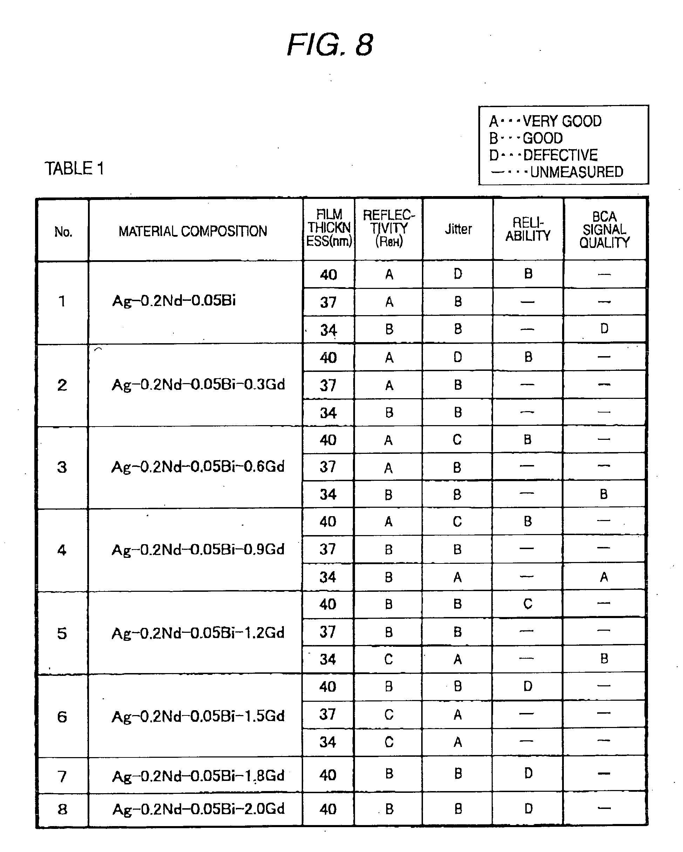

In the optical information recording medium 1 of the invention, a relationship between the composition of the reflective film 7 and a property originating from the composition is now described by reference to examples. Fig. 8 (Table 1) shows samples (Nos. 1 through 8) of the reflective film 7, in which components ofNd and Bi are fixed and a component of Gd is changed, and evaluation results thereof.
Test conditions are provided below.
In relation to reflectivity, an information signal was read from the side of the light transparent layer by a laser pickup having a laser wavelength of 405 nm and an objective-lens numerical aperture (N.A.) of 0.85 and through the use of a Blu-ray Disc evaluation machine ODU-1000 (hereinafter called a "BD evaluation machine") manufactured by Pulstec industrial Co., Ltd. The maximum value (R_{8H}) of a long mark (an 8T mark) signal, which has the maximum quantity of return light, among reading signals was measured. The maximum value was converted by reference to the amount of signal of a disk whose reflectivity is previously known, and a resultant value was defined as reflectivity of the disc. Reflectivity measurement was carried out every 100 H, 200 H, and 300 H (hours) before and after a constant temperature-and-humidity test. Conditions for the constant temperature-and-humidity test (an environment test) include a temperature of 80°C and a relative humidity of 85%, and reflectivity of the disc was measured every holding time 100 H by taking the disc out of a constant temperature and humidity chamber.

An information signal read by use of the Blu-ray Disc evaluation machine was subjected to waveform equalization processing by use of a limit equalizer, and it was converted into binary data "0" and "1" by a binarization circuit. A jitter value was measured by a time interval analyzer and through use of a clock synchronized by a PLL circuit and by use of binarized data. As in case with measurement of reflectivity, the jitter value as measured every 100 H before and after the constant temperature-and-humidity test.

As mentioned above, a BCA (Burst Cutting Area) was recorded in compliance with ROM standards for the BD (Blu-ray Disc) by use of a BCA recording laser in which the BCA (Burst Cutting Area) has a wavelength of 810 nm and a spot shape having a length of 40 µm and a width of 1 µm in. Specifically, a BCA recording laser spot was shifted in increments of 28 µm from an inner radius to an outer radius every turn of an Ag alloy optical disc, and a laser light was irradiated so as to have an overlap of 5 µm. Thus, a rectangular mark having a radial length of about 800 µm and a width of about 11.6 µm was radially formed within a region ranging from 21.2 mm to 22.0 mm in radius. The BCA mark was recorded at recording under the conditions of the number of revolutions of 900 rpm and the laser power of 4.4 W, and the signals were evaluated.

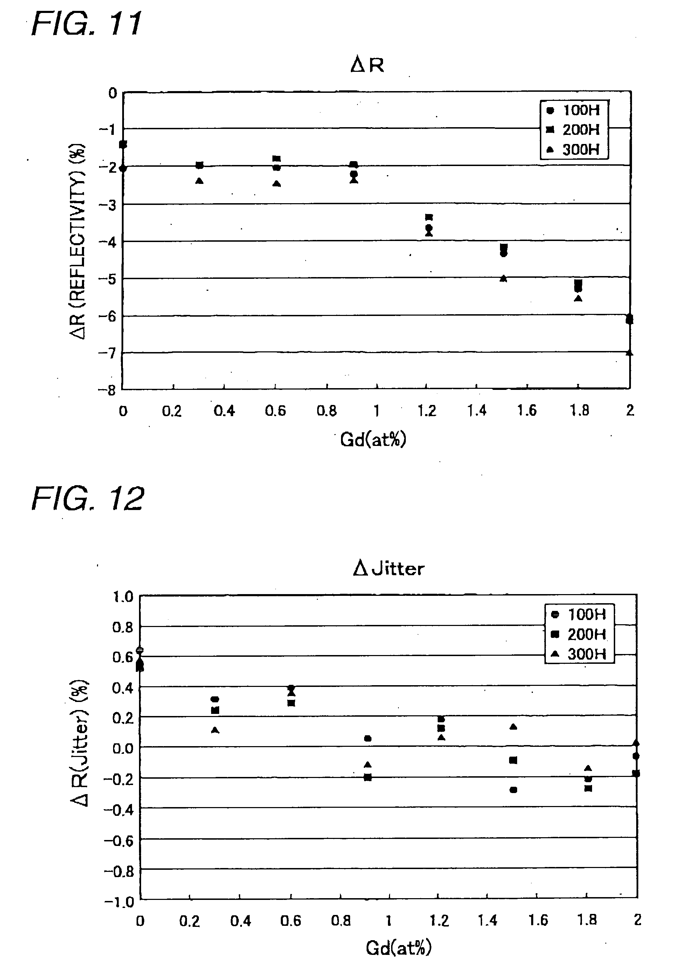

Test results are now described.
First, in the optical information recording medium 1 shown in Fig. 2, the reflective film 7 was made of Ag-0.2Nd-0.05Bi-αGd, and α was changed (Samples: 1 through 8). Three types of reflective films 7 having a thickness of 34 nm, 37 nm, and 40 nm were prepared for Samples 1 through 6. In samples 7 and 8, the thickness was set to 40 nm.
Symbols in Fig. 8 (Table 1) are now described. According to the blu-ray disc standards, the lower limit of reflectivity is 35%, but the reflectivity having 45% or more is practically desirable. For this reason, reflectivity exceeding 55% is represented by A; reflectivity of more than 44% and 55% or less is represented by B; and reflectivity of 44% or less is represented by C. Moreover, according to the standards, the upper limit of jitter value is 6.5%. Therefore, jitter value of less than 5% is represented by A; jitter value of from 5% or more and less than 6% is represented by B; jitter value of 6% or more and less than 6.5% is represented by C; and jitter value of 6.5% or more is represented by D. Reliability is represented by A, B, and C from Figs. 11 and 12 in accordance with amounts of changes in reflectivity and jitter value. BCA recording sensitivity was determined by reference to results shown in Fig. 11.

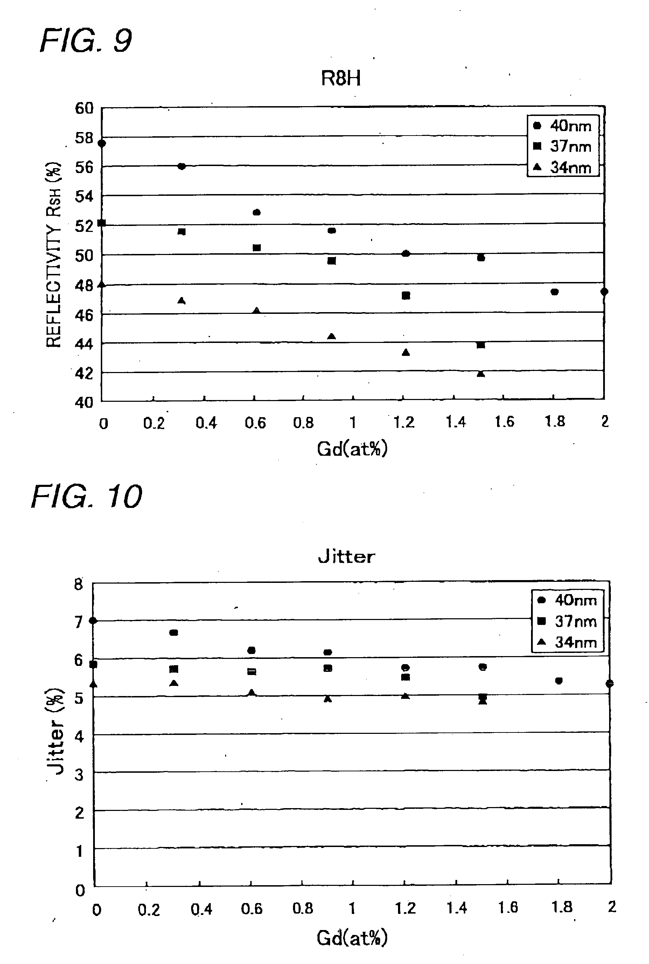

Figs. 9 and 10 are graphs showing measurement results of reflectivity R_{8H} and jitter value of the media in connection with the respective samples whose compositions and thicknesses were changed.
In Fig. 11, samples 1 through 8, each of which has a thickness of 40 nm, were subjected to a storage test at a temperature of 80°C and a relative humidity of 85%. The reflectivity R_{8H} was measured at every 100 hours, 200 hours, and 300 hours, and the results were plotted by determining a difference (ΔR) between an initial value and the measured values.
Likewise, in Fig. 12, samples 1 through 8, each of which has a thickness of 40 nm, were subjected to a storage test at a temperature of 80°C and a relative humidity of 85%. The Jitter value was measured at every 100 hours, 200 hours, and 300 hours, and the results were plotted by determining a difference (ΔR) between an initial value and the measured values.
Fig. 11 shows that a decrease in reflectivity determined by the storage environment test can be reduced to 3% or less, so long as the amount of Gd added is 1.0 atomic % or less. Moreover, Fig. 12 shows that a variation in jitter value after the storage environment test changes from an increase to a decrease at a point where the amount of Gd added is 1.0 atomic % and that the variation in jitter value can be reduced to 0.5% or less, so long as the amount of Gd added is 0.1 atomic % or more and 2.0 atomic % or less.
Therefore, a preferred composition range of Gd can be derived as 0.1 atomic % to 1.0 atomic % from the results shown in Figs. 11 and 12.

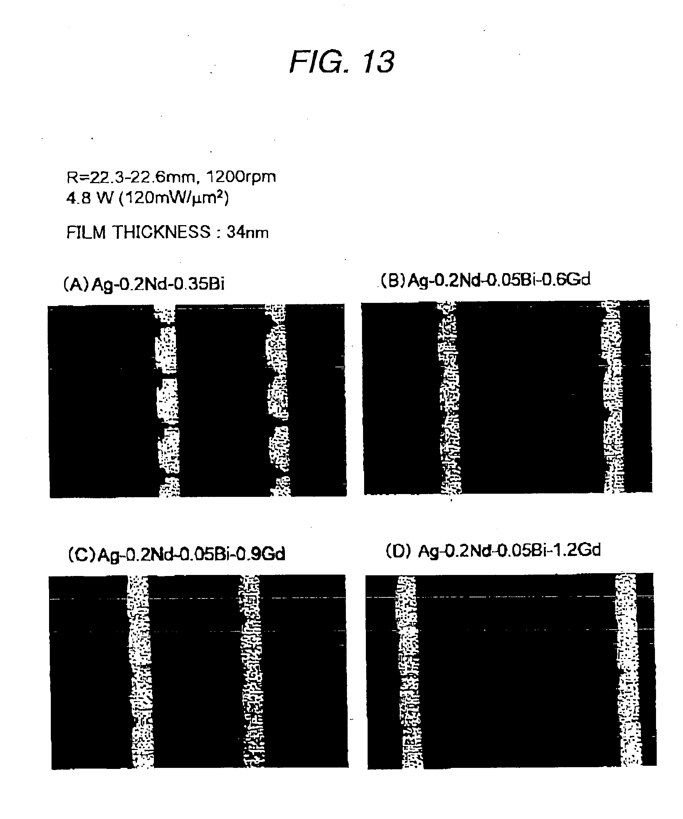

In Fig. 13, (A) shows an image (a transmission image) obtained by observing a record mark with a microscope after the BCA was recorded on the disc on which a reflective film (having a thickness of 34 nm) having a composition containing no Gd (No. 1) was formed; (B) shows an image (a transmission image) obtained by observing a record mark with a microscope after the BCA was recorded on the disc on which a reflective film (having a thickness of 34 nm) having a composition containing Gd in an amount of 0.6 atomic % (No. 3) was formed; (C) shows an image (a transmission image) obtained by observing a record mark with a microscope after the BCA was recorded on the disc on which a reflective film (having a thickness of 34 nm) having a composition containing Gd in an amount of 0.9 atomic % (No. 4) was formed; and (D) shows an image (a transmission image) obtained by observing a record mark with a microscope after the BCA was recorded on the disc on which a reflective film (having a thickness of 34 nm) having a composition containing Gd in an amount of 1.2 atomic % (No. 5) was formed. A desirable output for a laser output having 810 nm used during BCA recording is about 5 W or less from the commercial viewpoint. In the tests, the BCA code was recorded in a radial area ranging from 22.3 to 22.6 mm under the conditions of a laser power of 4.8 W and the number of rotations of 1200 rpm.

The photographs show that, in (A) in which Gd is not contained therein, there are partitioned recording marks and node-shaped residues interposed between the record marks. Since Gd is contained therein in (B) and (C), respectively, superior recording sensitivity is exhibited under the recording conditions, and the record mark is neatly formed without nodes or the like. Although Gd is contained therein in (D) and a superior mark is formed, residues existing in the mark are slightly large on possible account of excessively-superior sensitivity under the recording conditions.

Fig. 8 shows a summary of evaluation results achieved by reading of the BCA signal by use of the disc samples Nos. 1, 3, 4, and 5 that are used for observation in Fig. 13; that has a recorded BCA code; and that each have a thickness of 34 nm. Reading was evaluated to be good or defective on the basis of whether or not the original signal could be properly read after a detected signal had been subjected to error correction processing. Each sample signals was attempted to read for four times.

Even when all four attempts were made to subject the sample (No. 1) containing no Gd to error correction, no superior signal could not be decoded. In the meantime, in the case of the samples (Nos. 3, 4, and 5) in which Gd was added, a superior original signal could be decoded after error correction. In particular, in the case of sample No. 4, all of the four attempts led to successful decoding of a superior signal.

From the above, it is seen even from results achieved by evaluation of recording and reading of the BCA signal that addition of Gd effectively works and that additive amount of 0.6 atomic % or more thereof is particularly effective for enhancing sensitivity.
An effect is yielded, so long as a small amount of Gd is added. Therefore, the amount of Gd to be added is 1.0 atomic % or less (not including zero), preferably 0.1 atomic % or more and 1.0 atomic % or less, and more preferably 0.6 atomic % or more and 1.0 atomic % or less.

In the meantime, when Nd is added in an amount of 0.1 atomic % to 1.0 atomic %, an increase in the grain size of an Ag grain can be inhibited while a high reflection property and corrosion resistance (particularly, oxidation resistance) are maintained. When Nd is added in an amount of 0.1 atomic % or more, an increase in the grain size of an Ag grain, namely, coagulation of Ag is inhibited, whereby durability is enhanced. Moreover, in the case of consideration of a reflection property, the amount of Nd to be added is preferably set to 0.1 atomic % or less. Therefore, Nd to be contained is in an amount of 0.1 atomic % or more and 1.0 atomic % or less.

When Bi is added in an amount of from 0.005 atomic % to 0.4 atomic %, durability (thermal stability and chemical stability) can be enhanced while high reflectivity and high heat conductivity are exhibited. When the amount of Bi to be added exceeds 0.4 atomic %, high reflectivity and high heat conductivity of the reflective film cannot be assured. When the amount of Bi to be added is less than 0.005 atomic %, a coagulation inhibition effect of Ag induced by addition of Bi is not effectively exhibited. Therefore, Bi to be added is in an amount of 0.005 atomic % or more and 0.4 atomic % or less.

As mentioned above, according to the invention, in connection with a reading property of the read-only information recording portion with respect to a blue-violet laser light, the reflectivity of the medium is sufficiently larger than 35%, and a reduction in reflectivity after the environment test is less than 3%. Further, according to the invention, jitter value from a 17pp modulated signal fulfills a standard of less than 6.5%, and the amount of change in jitter value after the environment test is less than 0.5%. Further, according to the invention, there was produced an optical information recording medium that exhibits high recording sensitivity in connection with the recording property of the BCA recording portion; that involves few residues even in relation to the reading property, and that exhibits superior signal quality and enhanced reliability.

According to the BCA marking method of the invention, the original information recording portion, such as a content area or a lead-in area, is subjected to recording from a side opposite to a side where a blue-violet laser reading light enters, whereby laser marking, namely, the recoding sensitivity of the BCA signal, can be made constant regardless of whether the information recording face is a single layer or a multilayer, so that power for recording the BCA signal can be made constant. By virtue of this, an attempt is made to simplify an apparatus and operation for recording a BCA signal, hence, a large industrial benefit is yielded.

The above embodiment is directed to a case where a ROM-type optical information recording medium is adopted. However, a common reflective film in an BCA signal recording portion and an original information recording portion of a write-once optical information recording medium or a rewritable optical information recording medium is given the same composition as that of the reflective film 7, whereby an optical information recording medium exhibiting superior recording and reading property can be made.

Although the invention has been described in detail by reference to the specific embodiment, it is obvious to those skilled in the art that the present invention be subjected to various changes or modifications without departing the spirit and scope of the invention. The patent application is based on Japanese Patent Application No. 2006-299503 filed on November 2, 2006, entire contents of which are incorporated herein by reference.

## Claims

1. An optical information recording medium comprising:
a read-only information recording portion and a BCA (Burst Cutting Area) portion made by laser marking, wherein
a reflective film of an information recording face of the read-only information recording portion is made of a same material as that of a reflective film of the BCA portion;
a composition of the reflective film comprises Ag as a main component, and Nd, Gd, and Bi;
a component of the Nd is in an amount of 0.1 atomic % or more and 1.0 atomic % or less;
a component of the Gd is in an amount of 0.1 atomic % or more and 1.0 atomic % or less; and
a component of the Bi is in an amount of 0.005 atomic % or more and 0.4 atomic % or less.

2. The optical information recording medium according to claim 1, wherein reading of an information recorded in the information recording face of the read-only information recording portion and reading of a BCA signal from the BCA portion can be performed by a blue-violet laser reading light

3. The optical information recording medium according to claim 1, wherein the read-only information recording portion has a plurality of information recording faces laminated in a thickness direction, and each of reflective films of the information recording face is made of a same material as that of the reflective film of the BCA portion.

4. The optical information recording medium according to claim 3, wherein the plurality of reflective films include a first reflective film, and a plurality of other reflective films located at a position close to a face of the optical information recording medium on which the reading light enters and closer to the first reflective film; and
a thickness of the first reflective film is largest when compared with a thickness of the other reflective films.

5. An optical information recording medium comprising:
an information recording portion comprising an information recording face capable of recording at least one times and a BCA (Burst Cutting Area) portion made by laser marking, wherein
the information recording face includes at least a recording film for recording information and a reflective film located at a position distant from the recording film when viewed from a light entrance side;
the reflective film of the information recording face is made of a same material as that of the reflective film of the BCA portion;
a composition of the reflective film includes Ag as a main component, and Nd, Gd, and Bi;
a component of the Nd is in an amount of 0.1 atomic % or more and 1.0 atomic % or less;
a component of the Gd is in an amount of 0.1 atomic % or more and 1.0 atomic % or less; and
a component of the Bi is in an amount of 0.005 atomic % or more and 0.4 atomic % or less.

6. The optical information recording medium according to claim 5, wherein reading of information recorded in the information recording face of the information recoding portion and reading of a BCA signal from the BCA portion can be performed by a blue-violet laser reading light.

7. The optical information recording medium according to claim 5, wherein the information recording portion has a plurality of information recording faces laminated in a thickness direction, and a reflective film includes at least an information recording face located at the most distant position when viewed from a light entrance side among the information recording faces, and is made of a same material as that of the reflective film of the BCA portion.

8. A method for BCA (Burst Cutting Area) laser marking an optical information recording medium comprising a read-only information recording portion and a BCA (Burst Cutting Area) portion made by laser marking, wherein
a reflective film of at least one information recording face of the read-only information recording portion is made of a same material as that of a reflective film of the BCA portion;
a composition of the reflective film includes Ag as a main component, and Nd, Gd, and Bi;
a component of the Nd is in an amount of from 0.1 atomic % or more and 1.0 atomic % or less;
a component of the Gd is in an amount of from 0.1 atomic % or more and 1.0 atomic % or less; and
a component of the Bi is in an amount of from 0.005 atomic % or more and 0.4 atomic % or less,
wherein a laser light for marking is irradiated to the BCA portion from a face opposite to a face of the read-only information recording portion and BCA portion of the optical information recording medium on which a blue-violet laser reading light enters.

9. A method for manufacturing an optical information recording medium comprising a read-only information recording portion and a BCA (Burst Cutting Area) portion made by laser marking, wherein
a reflective film of at least one information recording face of the read-only information recording portion is made of a same material as that of a reflective film of the BCA portion;
a composition of the reflective film includes Ag as a main component, and Nd, Gd, and Bi;
a component of the Nd is in an amount of from 0.1 atomic % or more and 1.0 atomic % or less;
a component of the Gd is in an amount of from 0.1 atomic % or more and 1.0 atomic % or less; and
a component of the Bi is in an amount of from 0.005 atomic % or more and 0.4 atomic % or less,
wherein a laser light is irradiated to a face opposite to a face of the read-only information recording portion and BCA portion of the optical information recording medium on which a blue-violet laser reading light enters, to conduct laser marking to the BCA portion.
